# EUROPÄISCHE PATENTSCHRIFT

(11) **EP 0 860 737 B1**
(45) Veröffentlichungstag und Bekanntmachung des Hinweises auf die Patenterteilung: **19.10.2005**
(21) Anmeldenummer: 98100835.2
(22) Anmeldetag: 20.01.1998
(51) Int. Cl.: G03B 21/00, G09F 19/18, G03B 29/00

(54) **Bildwiedergabeeinrichtung**
Picture display device
Dispositif de reproduction d'images

(30) Priorität: 15.02.1997 DE 29702635 U
(43) Veröffentlichungstag der Anmeldung: 26.08.1998
(73) Patentinhaber: Ernst F. Ambrosius & Sohn Gegründet 1872 GmbH, 60489 Frankfurt am Main (DE)
(72) Erfinder: Ambrosius, Bernd Dipl.-Ing, 60389 Frankfurt am Main (DE)
(74) Vertreter: KEIL & SCHAAFHAUSEN Patentanwälte

(56) Entgegenhaltungen:
- US-A- 4 364 635
- US-A- 4 846 694
- US-A- 5 033 843

## Beschreibung

Die Erfindung betrifft eine Bildwiedergabeeinrichtung in Form eines Informationsdisplays, bestehend aus einer Projektionseinheit und einer hiervon getrennten Projektionsfläche.

Zur Präsentation von Waren, Dienstleistungen und Informationen auf Ausstellungen, Messen sowie in Schauräumen, Ladengeschäften, Büros, Museen etc. werden Informationsdisplays verwendet, die mit der gewünschten Form der Informationen versehen, insbesondere bedruckt sind und von außen beleuchtet werden. Als Informationsdisplays werden auch Monitore eingesetzt, die über Videorecorder oder dgl. mit Informationen versorgt werden. Insbesondere auf Ausstellungen, Messen und in Museen finden auch herkömmliche Diaprojektoren Verwendungen, mit denen Informationen an Wände projiziert werden.

Für viele Anwendungsbereiche haben sich diese Präsentationsformen nicht als ausreichend erwiesen. Insbesondere zeigen sich die bekannten Bildwiedergabeeinrichtungen als nicht flexibel genug und erfüllen insbesondere nicht die Anforderungen, die an eine zeitgemäße Form der Präsentation gestellt werden. Außerdem lassen sich mit diesen nicht die Möglichkeiten der neuen Technologien und Medien bei der Präsentation von Waren und Dienstleistungen einsetzen.

Aufgabe der vorliegenden Erfindung ist es daher, eine Bildwiedergabeeinrichtung der eingangs genannten Art zu schaffen, die neue Dimensionen bei der die Art der Vermittlung von Informationen im Zusammenhang mit der Präsentation von Waren, Dienstleistungen und Informationen ermöglicht.

Diese Aufgabe wird erfindungsgemäß mit den Merkmalen des Anspruchs 1 gelöst.

Mit der erfindungsgemäßen Bildwiedergabeeinrichtung wird die Möglichkeit eröffnet, ein Bild quasi im Raum schweben zu lassen. Dabei ist die Form und Größe des Projektionsflächen-Trägers weitgehend in das Ermessen dessen gestellt, der eine derartige Bildwiedergabeeinrichtung verwenden will. Diese Freiheit bei der Konstruktion des Informationsdisplays wird nur durch die optischen Gesetze eingeschränkt, die vorschreiben, daß die Projektionseinheit zentriert und lotrecht zur Projektionsfläche anzuordnen ist, wobei die Größe des durchscheinenden Bildes durch die verwendete Optik der Projektionseinheit sowie dem Abstand zwischen der Projektionseinheit und der Projektionsfläche bestimmt wird. Dadurch, daß die Projektionseinheit im Fuß eines Gehäuses, Gestells, Möbels, einer Präsentations- oder Verkaufseinheit oder dgl. Träger verborgen angeordnet ist, wird der überraschende Effekt des im Raum schwebenden Bildes noch verstärkt. Die Projektionseinheit ist insbesondere im Fuß des Projektionsflächen-Trägers derart angeordnet ist, daß sie von außen nicht sichtbar ist. Dieses ist deshalb möglich, weil es zwischen der kompakten Projektionseinheit und der Projektionsfläche keinerlei elektrische Verbindungen gibt.

Auf der Platte aus klarem Material ist als Projektionsfläche eine mattierte Beschichtung, auf die die Projektionseinheit eine gewünschte Information (Bild und/oder Text) projiziert, und/oder eine transparente Folie mit der gewünschten Information in Form von Bild und/oder Text aufgebracht, wobei die Information von der Projektionseinheit von hinten projiziert bzw. durchscheinend beleuchtet wird. Die Art der Aufbringung der gewünschten Information auf der Platte kann unterschiedlich sein und hängt maßgebend von der Art der Schaustellung sowie der zu vermittelnden Informationen ab.

Um die Anbringung der gewünschten Information auf die Platte möglichst einfach zu gestalten, kann die Information zunächst auf einer transparenten Folie oder dgl. aufgebracht werden, die dann an der klaren Platte der Projektionsfläche angebracht wird. Da sich derartige transparente Folien heutzutage in ausgezeichneter Qualität z.B. mittels Laserdruckern sauber und auch farbig bedrucken lassen, wobei die hierfür erforderlichen Hilfsmittel auf jeder Messe oder auch in Ladengeschäften oder Museen usw. verfügbar sind, lassen sich diese Informationen auch kurzfristig herstellen und ändern.

Um die Projektionsfläche gut auszuleuchten, ist die Projektionseinheit von ihrem technischen Aufbau wie ein Projektor ausgebildet, in dessen Bildebene eine leere Maske angeordnet ist. Diese läßt sich mit einer geeigneten Optik auf die Projektionsfläche projizieren, wobei nicht nur die mit Informationen versehene Projektionsfläche gleichmäßig ausgeleuchtet, sondern aufgrund der Maske das durchscheinende Bild seitlich auch begrenzt wird. Dieses wird mit der Erfindung dadurch erreicht, daß die leere Maske so ausgebildet ist, daß nur der mit der gewünschten Information versehene Teil der Projektionsfläche von hinten beleuchtet wird.

Gemäß einer Ausgestaltung der Erfindung kann auch nur ein Bereich der ansonsten klaren Platte mattiert sein, nämlich der Bereich, der zur Projektion bestimmt ist.

Damit die Projektionsfläche absolut plan und vor einer Beschädigung geschützt ist und der Informationsträger gegebenenfalls leicht ausgetauscht werden kann, ist in Weiterbildung des Erfindungsgedankens vorgesehen, daß die Platte aus klarem Material zweigeteilt ausgebildet ist und die transparente Folie oder dgl. zwischen den beiden Platten angeordnet ist.

Für bestimmte Anwendungsfälle hat es sich als vorteilhaft erwiesen, daß die klare Platte in ihrer Gesamtheit aus getöntem Material besteht.

Eine Möglichkeit der Bildprojektion bei dieser Ausführungsform besteht darin, daß in der Bildebene der Projektionseinheit erfindungsgemäß ein Diapositiv angeordnet ist, das auf die Projektionsfläche projiziert wird. Diapositive sind in perfekter Qualität einfach und schnell herstell- und reproduzierbar, so daß auch die Bildwiedergabeeinrichtung an sich einfach und kostengünstig herstellbar ist.

Eine andere Möglichkeit der erfindungsgemäßen Bildprojektion besteht darin, daß in der Bildebene der Projektionseinheit ein zur optischen Darstellung von bewegten und/oder unbewegten Bildern und/oder Daten bestimmtes Display mit einer dazugehörigen Ansteuereinheit angeordnet ist, das mit einem Rechner, insbesondere einem "Stand-alone-Rechner", verbunden ist. Die Ansteuereinheit ermöglicht es, das Display wie einen Monitor zu benutzen. Mit dieser Technik kann ein Videobild auch im Breitwandformat projiziert werden. Wird gemäß einer besonderen Ausgestaltung der vorliegenden Erfindung als Display dabei ein Farb-Matrix-Display verwendet, ist die Qualität des Videobildes, insbesondere wenn es sich bei dem Display um ein hochauflösendes handelt, von hervorragender Qualität.

Eine noch weitere Ausgestaltung dieses Erfindungsgedankens sieht vor, daß das Display und der Rechner eine komplette Einheit bilden, die ein über eine genormte Schnittstelle eingelesenes Bild speichert und projiziert. Diese Ausgestaltung hat den Vorteil, daß das Bild auch beim Ausschalten erhalten bleibt.

Ein Vorteil der zuvor beschriebenen Ausführungsformen besteht darin, daß auf der Platte in der Projektionsfläche sowohl eine gewünschte Information (Bild und/oder Text) durchscheinend aufbringbar, als auch eine weitere Information (Bild und/oder Text) dazu projizierbar ist. Damit wird die Möglichkeit geschaffen, die auf einer bedruckten transparenten Folie oder dgl. enthaltenen Informationen mittels eines Dias oder eines rechnergesteuerten Displays mit zusätzlichen Informationen auf der Projektionsfläche zu überlagern. Damit werden neue Informationsmöglichkeiten eröffnet.

Um die Variationsmöglichkeiten in Anpassung an die räumlichen und sachlichen Gegebenheiten verändern zu können, können die Objektive der Projektionseinheit austauschbar sein. Dadurch werden auch die Freiheiten im Design vergrößert. So kann die Projektionseinheit z.B. in einen Schreibtisch oder eine Regalwand eingebaut werden. Um die erfindungsgemäße Bildwiedergabeeinrichtung im "Hightech-Einsatz" zu verwenden, kann diese als TV- oder Computermonitor mit unterschiedlichsten Gehäusen verwendet werden.

Weitere Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: einen Teilschnitt durch eine erfindungsgemäße Bildwiedergabeeinrichtung,
- Fig. 2: einen Schnitt entlang der Linie A-B in Fig. 1,
- Fig. 3: eine Fig. 2 entsprechende Darstellung einer anderen Ausführungsform einer erfindungsgemäßen Projektionsfläche und

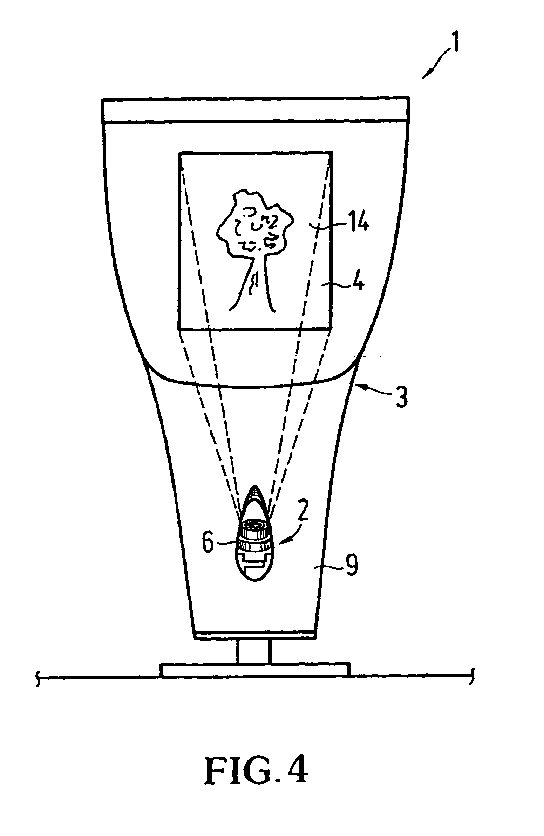

- Fig. 4: eine Ansicht auf eine Ausführungsform einer erfindungsgemäßen Bildwiedergabeeinrichtung.

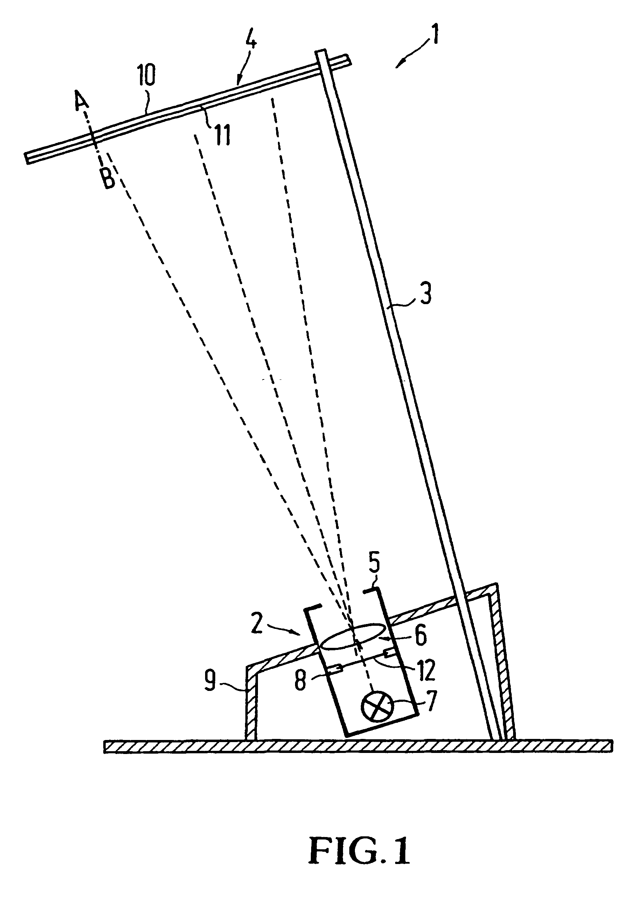

Die in Fig. 1 dargestellte Bildwiedergabeeinrichtung 1 besteht aus einer Projektionseinheit 2 und einer an einem Projektionsflächen-Träger 3 angeordneten Projektionsfläche 4. Die Projektionseinheit 2 besteht aus einer in einem Gehäuse 5 angeordneten Optik 6 und einer Lichtquelle 7. In der sich in der Bildebene der Projektionseinheit 2 befindlichen Bildbühne 8 ist entweder eine leere Maske, ein Diapositiv oder Farb-Matrix-Display angeordnet, die, da sie beliebig austauschbar sind, mit der gleichen Bezugsziffer 12 bezeichnet und weiter unter näher beschrieben sind.

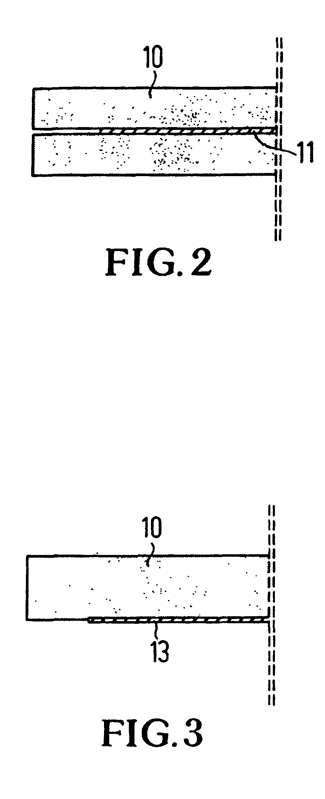

Die Projektionseinheit 2 ist in einem Gerätefußteil 9 so angeordnet, daß sie einerseits von außen optisch nicht wahrgenommen wird und andererseits in bezug auf die Projektionsfläche zentriert und lotrecht angeordnet ist. Die Projektionsfläche 4 besteht aus einer Platte 10 aus klarem Material, die in dem dargestellten Ausführungsbeispiel zweigeteilt ist. Zwischen den Plattenteilen ist eine transparente Folie 11 angeordnet. Die spezielle Ausgestaltung der Platte 10 der Projektionsfläche 2 gemäß Fig. 1 ist in Fig. 2 im Schnitt vergrößert dargestellt.

Auch wenn sich die besondere Ausgestaltung der Platte 10 mit der dazwischen angeordneten transparenten Folie 11 gemäß den Fig. 1 und 2 als besonders vorteilhaft erwiesen hat, ist die Erfindung hierauf nicht beschränkt. Die erfinderische Lehre wird bereits dann verwirklicht, wenn die gewünschte Information auf einer Platte aus klarem Material durchscheinend aufgebracht ist, wobei diese Information von der Projektionseinheit 2 von hinten beleuchtet wird. Die gewünschte Information kann dabei auch auf einer transparenten Folie aufgebracht sein, die auf einer einstückigen Platte aus klarem Material der Projektionsfläche 4 aufgebracht ist.

Bei allen beschriebenen Ausführungsformen wird ein vermeintlich im Raum schwebendes Bild erzeugt. Die kompakte Projektionseinheit 2, die über keine elektrische Verbindung zur Projektionsfläche 4 verfügt, wird von einem Betrachter nicht wahrgenommen.

Damit nur die mit der gewünschten Information versehene, insbesondere bedruckte Fläche exakt begrenzt von hinten beleuchtet wird, ist in der Bildebene 8 der Projektionseinheit 2 eine leere Maske 12 angeordnet.

Wird die leere Maske 12 in der Bildebene 8 der Projektionseinheit 2 durch ein Diapositiv ersetzt, läßt sich dieses auf die Projektionsfläche 2 projizieren. Um das von dem Diapositiv 12 projizierte Bild auf der Projektionsfläche 4 sichtbar zu machen, ist auf der Platte 10 aus klarem Material, die in dem beschriebenen Ausführungsbeispiel nicht zweigeteilt zu sein braucht, eine mattierte Beschichtung 13 aufgebracht. Diese Ausführungsform einer Projektionsplatte 10 ist in Fig. 3 dargestellt. Falls nur ein Teil der Projektionsfläche 4 zur Projektion bestimmt ist, braucht auch nur dieser Bereich der ansonsten klaren Platte 10 mattiert sein.

Soll die Bildwiedergabeeinrichtung 1 im Hightech-Bereich eingesetzt werden, kann anstelle eines Diapositivs auch ein zur optischen Darstellung von Daten bestimmtes Display 12 in der Bildbühne 8 eingesetzt werden, wobei das Display mit einer nicht dargestellten Ansteuereinheit und einem Rechner verbunden ist. Mittels des ebenfalls nicht näher dargestellten Displays 12 läßt sich ein Videobild auch im Breitbandformat projizieren und die Bildwiedergabeeinrichtung kann wie ein Monitor arbeiten. Hierfür wird das Display von einem nicht dargestellten handelsüblichen, insbesondere tragbaren Personalcomputer über einen ebenfalls nicht dargestelltes handelsübliches Kabel mit einem digitalen Bild geladen, welches auch beim Ausschalten der Projektionseinheit 2 nicht verloren geht, so daß die Projektionseinheit wie eine Lampe eingeschaltet werden kann und das gespeicherte Bild projiziert.

Je hochauflösender das Display 12 ist, um so besser ist die Wiedergabequalität. Es hat sich als vorteilhaft erwiesen, sogenannte Farb-Matrix-Displays zu verwenden.

Dadurch, daß die Projektionseinheit 2 wie ein Projektor aufgebaut ist, besteht die Möglicheit, unterschiedlich große durchscheinende Bilder 14 zu projizieren. Diese Möglichkeit wird erleichtert durch den Einsatz unterschiedlicher Objektive. Durch diese Projektionstechnik wird außerdem die Möglichkeit geschaffen, den Abstand zwischen der Projektionseinheit 2 und der Projektionsfläche 4 beliebig zu variieren. Damit werden ungeahnte Freiheiten für das Design der Bildwiedergabeeinrichtung 1 geschaffen. So läßt sich die Projektionseinheit 2 beispielsweise in einen Schreibtisch oder eine Regalwand einbauen oder in einem Schreibtisch läßt sich eine Glasplatte zum Hochklappen einrichten, die dann als Projektionsfläche dient.

Durch den Austausch der mit 12 bezeichneten Einsätze in der Bildbühne 8 läßt sich die Bildwiedergabeeinrichtung 1 ohne großen Aufwand schnell umrüsten. So kann diese neben dem erwähnten "Hightech-Einsatz", d.h. ihrer Verwendung als TV- oder Computermonitor in neuartiger Form, auch ohne die Elektronik als herkömmlicher Diaprojektor eingesetzt werden.

Da erfindungsgemäß die Möglichkeit besteht, sowohl ein von einem Diapositiv oder von einem elektronischen Display erzeugtes Bild auf die Projektionsfläche 4 zu projizieren als auch gleichzeitig in der Projektionsebene eine mit einem Text, Bild oder sonstigen Information bedruckte transparente Folie anzubringen, die von der gleichen Projektionseinheit 2 von hinten beleuchtet wird, ergibt sich ein reizvoller Überlagerungseffekt, der ungeahnte Präsentationsmöglichkeiten eröffnet.

Als transparente Folie 11 lassen sich alle mit einer Beschriftung versehenen Folien verwenden, wobei die einfachste Form einer derartigen Folie Transparentpapier ist, das heutzutage mit guten Laserdruckern sauber bedruckt werden kann. Aber auch andere transparente Folien sind vorstellbar, die mit einfachsten Mitteln in perfekte Qualität beschriftet werden können.

Die Form der Projektionsflächen-Träger 3 und das für ihre Herstellung verwendete Material kann beliebiger Art sein. Dieses betrifft auch die Größe der Projektionsflächen-Träger. Lediglich die darin angeordneten Platten 10 aus durchsichtigem Material mit den entweder aufgebrachten oder dazwischenliegenden transparenten Folien 11 müssen so angeordnet sein, daß die Projektionseinheit 2 zentriert und lotrecht in beiden Achsen im Projektionsflächen-Träger 3 angeordnet werden kann.

Für Anwendungen, die die Möglichkeit der Bedruckung der transparenten Auf- oder Einlage nicht benötigen, kann, wie oben ausgeführt, eine einstückige Platte 10 aus klarem Material verwendet werden, in der der Bereich der zur Projektion gewünschten Fläche entsprechend mattiert ist.

Das Diapositiv 12 läßt sich auch auf eine Projektionsfläche 4 projizieren, bei der die Platte 10 aus einem getönten Material besteht. Bei dieser Ausführungsform wird die Projektionsfläche 4 für einen Betrachter als solche nur erkennbar, wenn die Projektionseinheit 2 eingeschaltet wird.

## Patentansprüche

1. Bildwiedergabeeinrichtung in Form eines Informationsdisplays, bestehend aus einer Projektionseinheit (2) und einer hiervon optisch getrennten Projektionsfläche (4), wobei die Projektionsfläche (4) aus einer Platte (10) aus klarem Material wie Glas, Plexiglas oder dgl. besteht, an der eine transparente Folie (11) oder dgl. zur Erzeugung eines durchscheinenden Bildes (14) angebracht ist,
**dadurch gekennzeichnet, daß** die Projektionseinheit (2) im Fuß eines Gehäuses, Gestells, Möbels, einer Präsentations- oder Verkaufseinheit, insbesondere im Fuß des Projektionsflächen-Trägers (3) angeordnet ist, und die Projektionsfläche (4) von einem, gegebenenfalls getrennten, Träger (3) gehalten wird,
daß auf der Platte (10) aus klarem Material der Projektionsfläche (4) eine mattierte Beschichtung (13) und/oder eine transparente Folie (11) aufgebracht ist, auf die die Projektionseinheit (2) eine gewünschte Information wie Bild und/oder Text ausleuchtet, und
daß in der Bildebene (8) der Projektionseinheit (2) eine leere Maske (12) angeordnet ist, die so ausgebildet ist, daß nur der mit der gewünschten Information versehene durchscheinende Teil (14) der Projektionsfläche (4) von hinten beleuchtet wird.

2. Bildwiedergabeeinrichtung nach Anspruch 1, **dadurch gekennzeichnet, daß** nur der Bereich der ansonsten klaren Platte (10), der zur Projektion bestimmt ist, eine mattierte Beschichtung aufweist.

3. Bildwiedergabeeinrichtung nach Anspruch 1, **dadurch gekennzeichnet, daß** die Platte (10) aus klarem Material zweigeteilt ausgebildet ist und die transparente Folie (11) zwischen den beiden Platten (10) angeordnet ist.

4. Bildwiedergabeeinrichtung nach einem der Ansprüche 1 bis 3, **dadurch gekennzeichnet, daß** die Platte (10) aus getöntem Material besteht.

5. Bildwiedergabeeinrichtung nach einem der Ansprüche 1 bis 4, **dadurch gekennzeichnet, daß** in der Bildebene (8) der Projektionseinheit (2) ein Diapositiv (12) angeordnet ist, das auf die Projektionsfläche (4) projiziert wird.

6. Bildwiedergabeeinrichtung nach einem der Ansprüche 1 bis 4, **dadurch gekennzeichnet, daß** in der Bildebene (8) der Projektionseinheit (2) ein zur optischen Darstellung von bewegten und/oder unbewegten Bildern und/oder Daten bestimmtes Display (12) mit einer dazugehörigen Ansteuereinheit angeordnet ist, das mit einem Rechner, insbesondere einem "Stand-alone-Rechner", verbunden ist.

7. Bildwiedergabeeinrichtung nach Anspruch 6, **dadurch gekennzeichnet, daß** das Display (12) und der Rechner eine komplette Einheit bilden, die ein über eine genormte Schnittstelle eingelesenes Bild (14) speichert und projiziert.

8. Bildwiedergabeeinrichtung nach einem der vorhergehenden Ansprüche, **dadurch gekennzeichnet, daß** auf der Platte (10) aus klarem Material in der Projektionsfläche (4) sowohl eine gewünschte Information wie Bild und/oder Text durchscheinend aufgebracht, als auch eine weitere Information wie Bild und/oder Text dazu projizierbar ist.

## Claims

1. Image-reproduction device in the form of an information display, consisting of a projection unit (2) and a projection surface (4) optically spaced therefrom, the projection surface (4) consisting of a panel (10) of clear material such as glass, Plexiglass or the like, on which a transparent film (11) or the like is mounted to create a translucent image (14),
**characterized in that**
the projection unit (2) is arranged in the base of a housing, stand, item of furniture, a presentation stand or sales stand, especially in the base of the projection surface support (3), and the projection surface (4) is held by an, optionally separate, support (3),
there is applied to the panel (10) of clear material of the projection surface (4) a matt coating (13) and/or a transparent film (11) onto which the projection unit (2) shines desired information, such as an image and/or text, and
in the image plane (8) of the projection unit (2) there is arranged a blank mask (12) which is so configured that only the translucent portion (14) of the projection surface (4) provided with the desired information is illuminated from behind.

2. Image-reproduction device according to claim 1, **characterized in that** only the region of the otherwise clear panel (10) that is intended for projection has a matt coating.

3. Image-reproduction device according to claim 1, **characterized in that** the panel (10) of clear material is of two-part construction and the transparent film (11) is arranged between the two panels (10).

4. Image-reproduction device according to any one of claims 1 to 3, **characterized in that** the panel (10) consists of tinted material.

5. Image-reproduction device according to any one of claims 1 to 4, **characterized in that** in the image plane (8) of the projection unit (2) there is arranged a transparency (12) which is projected onto the projection surface (4).

6. Image-reproduction device according to any one of claims 1 to 4, **characterized in that** in the image plane (8) of the projection unit (2) there is arranged a display (12) intended for the optical display of moving and/or non-moving images and/or data having an associated actuator unit, which display (12) is connected to a computer, especially a stand-alone computer.

7. Image-reproduction device according to claim 6, **characterized in that** the display (12) and the computer form a complete unit which stores and projects an image (14) input by way of a standard interface.

8. Image-reproduction device according to any one of the preceding claims, **characterized in that** the panel (10) of clear material in the projection surface (4) both has desired information, such as an image and/or text, applied to it in translucent form and has further information, such as an image and/or text, additionally projectable onto it.

## Revendications

1. Dispositif de reproduction d'images sous la forme d'un affichage d'informations, composé d'une unité de projection (2) et d'une surface de projection (4) séparée optiquement de l'unité de projection, la surface de projection (4) étant composée d'une plaque (10) fabriquée dans un matériau transparent tel que du verre, du plexiglas ou un matériau semblable, sur laquelle plaque est appliquée une pellicule transparente (11) ou un matériau similaire pour créer une image translucide, **caractérisé en ce que** l'unité de projection (2) est disposée dans le pied d'un boîtier, d'un bâti, d'un meuble, d'une unité de présentation ou de vente, notamment dans le pied du support (3) de la surface de projection, et la surface de projection (4) est tenue par un support (3), le cas échéant séparé,
**en ce qu'**un revêtement matte (13) et/ou une pellicule transparente (11) est apposé sur la plaque (10), sur lequel l'unité de projection (2) éclaire une information souhaitée, telle qu'une image et/ou un texte, et
**en ce qu'**un masque vide (12), conçu de telle sorte que seule soit éclairée de l'arrière la partie (14) de la surface de projection (4) pourvue de l'information souhaitée, est disposé dans le plan d'image (8) de l'unité de projection (1).

2. Dispositif de reproduction d'images selon la revendication 1, **caractérisé en ce que** seule la partie de la plaque (10) destinée à la projection est munie d'un revêtement matte, le reste de la plaque étant clair.

3. Dispositif de reproduction d'images selon la revendication 1, **caractérisé en ce que** la plaque (10) est formée en deux parties réalisées dans un matériau transparent et la pellicule transparente (11) est disposée entre les deux plaques (10).

4. Dispositif de reproduction d'images selon l'une des revendications 1 à 3, **caractérisé en ce que** la plaque (10) est constituée d'un matériau coloré.

5. Dispositif de reproduction d'images selon l'une des revendications 1 à 4, **caractérisé en ce qu'**une diapositive (12) qui est disposée dans le plan d'image (8) de l'unité de projection (2) est projetée sur la surface de projection (4).

6. Dispositif de reproduction d'images selon l'une des revendications 1 à 4, **caractérisé en ce qu'**un display (12) destiné à la représentation optique d'images et/ou de données mobiles et/ou immobiles est disposé avec l'unité de commande correspondante dans le plan d'image (8) et est relié à un ordinateur, notamment à un ordinateur autonome.

7. Dispositif de reproduction d'images selon la revendication 6, **caractérisé en ce que** le display (12) et l'ordinateur forment une unité complète qui mémorise et projette une image (14) lue par l'intermédiaire d'une interface normée.

8. Dispositif de reproduction d'images selon l'une des revendications précédentes, **caractérisé en ce que** sur la plaque en matériau transparent, dans la surface de projection (4), est aussi bien apposé une information souhaitée translucide, telle qu'une image et/ou un texte, que peut être projetée en plus une information supplémentaire, telle qu'une image et/ou un texte.
